# EUROPEAN PATENT SPECIFICATION

(11) **EP 2 776 207 B1**
(45) Date of publication and mention of the grant of the patent: **27.03.2019**
(21) Application number: 12847744.5
(22) Date of filing: 13.11.2012
(51) Int. Cl.: B23K 26/042, B23K 26/38

(54) **DYNAMIC HEIGHT ADJUSTING SYSTEM AND METHOD FOR A HEAD ASSEMBLY OF A LASER PROCESSING SYSTEM**
DYNAMISCHES HÖHENVERSTELLUNGSSYSTEM UND VERFAHREN FÜR EINE KOPFANORDNUNG EINES LASERVERARBEITUNGSSYSTEMS
SYSTÈME DYNAMIQUE DE RÉGLAGE DE LA HAUTEUR ET PROCÉDÉ PERMETTANT UN ASSEMBLAGE DE TÊTE D'UN SYSTÈME DE TRAITEMENT PAR LASER

(30) Priority: 10.11.2011 US 201161558261 P
(43) Date of publication of application: 17.09.2014
(73) Proprietor: IPG Photonics Corporation, Oxford, Massachusetts 01540 (US)
(72) Inventor: LESLIE, Walter, Oxford, MA 01540 (US); CASTAGNA, Peter, Oxford, MA 01540 (US)
(74) Representative: Kohlmann, Kai
(86) International application number: PCT/US2012/064795
(87) International publication number: WO 2013/071283

(56) References cited:
- WO-A1-98/58230
- JP-A- H06 134 589
- JP-A- H06 210 476
- JP-A- H06 226 480
- KR-U- 960 007 230
- US-A- 5 136 250
- US-A- 5 371 336
- US-A1- 2011 089 956
- US-A1- 2011 089 956

## Description

### BACKGROUND OF THE INVENTION

### Field of the Invention

The present invention relates to dynamic height adjusting system and method preferably for use with a laser processing system. More particularly, the present invention provides a dynamic cutting head height adjusting system involving use of a single frequency in which a change in phase is processed to determine changes in height over a work piece with increased reliability, and enhanced process control.

### Description of the Related Art

Cutting head assemblies for laser processing systems are recognized from Applicant's innovative developments in US Ser. No. 61/542,156 filed October 1, 2011. Applicant's cutting head optionally includes a co-located or remote computerized process controllers for uses as noted therein. This system discusses an operative system for processing of a work piece by means of a laser beam.

A method for monitoring thermal processing (welding) of a work piece is known from US 5,694,046 (Hillerich). This method employs a requirement to form a complex measured capacitance frequency distribution compared to a reference frequency distribution to determine a thermal processing parameter (welding) for a work piece. It recognized that such complex signal methods employs delays in signal determination, is easily compromised by fluxation in voltage, signal interference errors, and an inability to continuously record measured capacitances over the duration of individual laser pulses during welding. Such a method is ill-suited for continuous adaptation to high speed laser processing in an integrated dynamic production cycle.

US 2011/089956 A discloses a capacitive gauging system for measuring the height of a laser head above a work piece having an analogue circuit that performs rapid capacitive sensing. The capacitance sensor of the capacitive gauging system employs an oscillator. The frequency generated by the oscillator is a function of resistance, capacitance and/or inductance. As the distance between the tip of the laser head and the work piece changes, the capacitance changes, resulting in a change in the oscillator frequency. The laser head nozzle forming a first plate of the capacitor, while the work piece forms the second plate of the capacitor.

US 5 136 250 A discloses a process to determine the distance between a magnetic disc surface and a read/write head of a computer storage system based upon changes in the phase shift of an AC signal due to capacitive variations. in a different technological field

Accordingly, there is a need for an improved dynamic height adjusting system and method for a head assembly of a laser processing system.

### ASPECTS AND SUMMARY OF THE INVENTION

In response to at least one of the noted concerns, the present invention provides a dynamic height adjusting system and method for operating a head assembly of a laser processing systems, according to claims 1 and 9. The proposed method and system allows for accurate process control throughout a process cycle that is not limited to the type of laser processing conducted.

In an alternative refinement of the present invention a process control uses capacitance for a head assembly of a laser processing system throughout a process cycle in which a change in phase of a single frequency is monitored to determine changes in distance between a work piece and a laser nozzle.

Another aspect of the present invention enables easy and operative integration of alternative work piece shapes, materials, types, coatings, and thicknesses while maintaining a continuous process.

Another aspect of the present invention enables correction for ambient process temperature to eliminate signal error and enhance process control.

In yet a further alternative aspect of the present invention, the proposed method and system is operatively adaptable to cutting a wide variety of work pieces, including metals, and more particularly including materials that are coated on one or more sides.

In a further refinement of the proposed invention the system and method accommodates work pieces which are not flat, or which may be substantially flat but contain non-flat regions with improved accuracy.

In a further refinement of the proposed invention, multiple continuous cutting heads may be operatively controlled by a central process control unit or by one or more remote process control units.

The proposed method and system further operatively enables a satisfactory monitoring of one or more cutting heads throughout a continuous process cycle, particularly wherein, a continuous process cycle involves intervals of use-nonuse or wherein a work piece may experience variable rates of thermal expansion.

Another aspect of the present invention enables operative control of one or more process heads for use with work pieces having same or differing thicknesses, such that an indication of initial thickness per work piece may be adopted by a process controller for operative guidance of an individual process head through a use cycle.

The proposed system and method involves use of a single frequency in which a change in phase is continuously measured and a continuous process determines changes in height or distance between a work piece within an increased reliability and speedy adaptation.

The system further enables multiple operative computerized processor controls and substantial improvements in process control signal and feedback distribution throughout an integrated process system and optional remote interface.

The above and other aspects, features and advantages of the present invention will become apparent from the following description read in conjunction with the accompanying drawings, in which like reference numerals designate the same elements.

### BRIEF DESCRIPTION OF THE DRAWINGS

FIG. 1 is a schematic illustration of an optional system according to the present invention noting a cutting head relative to a work piece.
FIG. 2 is a schematic illustration of a cutting head and a work piece according to the present invention.
FIG. 3 is a graphical representation of a single frequency phase signal shift (from a phase detector) causing an amplified output to go to full range, this amplified phase detector output is digitized and the measured phase change represents a capacitance change in the cutting head.
FIG. 4 is a graphical representation of the non-linear relationship between capacitance (as phase measurement output voltage (mV)) and stand off height (in mm) from a work piece.
FIG. 5 is a schematic illustration of a cutting head sensor electronics system noting the interrelation between the cutting head nozzle, a process control unit, and various signals and support elements for operative cycle use.
FIG. 6 is an exemplary process flow diagram for the proposed system and method for a head assembly of a laser processing system.

### DETAILED DESCRIPTION OF THE PREFERRED EMBODIMENTS

Reference will now be made in detail to embodiments of the invention. Wherever possible, same or similar reference numerals are used in the drawings and the description to refer to the same or like parts or steps. The drawings are in simplified form and are not to precise scale. For purposes of convenience and clarity only, directional indicators terms may be used with respect to the drawings. These and similar directional terms should not be construed to limit the scope of the invention in any manner.

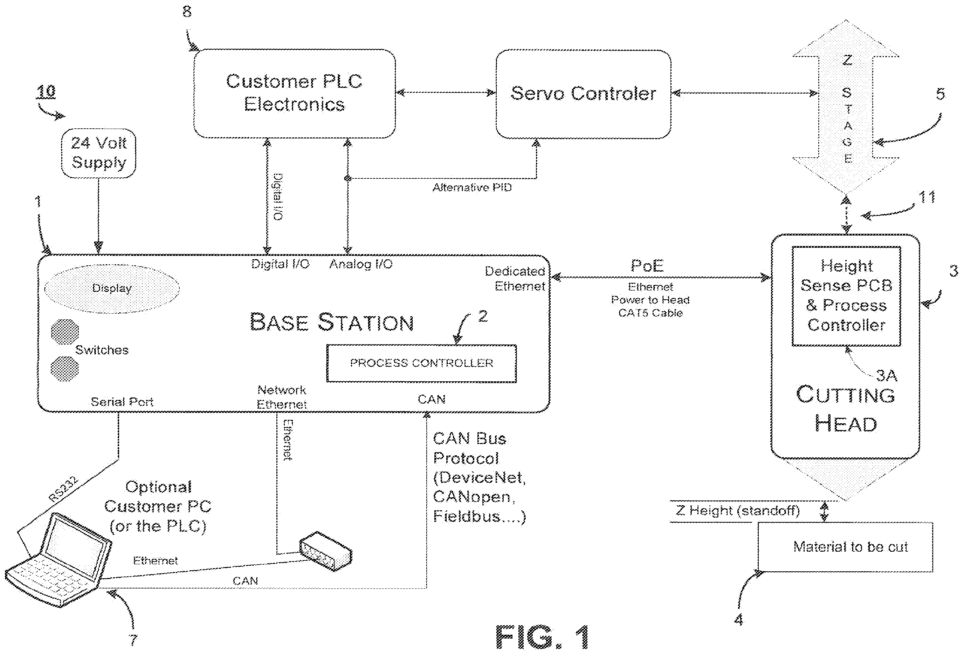

Referring to Fig. 1, one alternative of the present inventions provides a system 10 for dynamic height adjusting of a head assembly of a laser processing system (incorporated via the shown cutting head). Various elements are in communication and are operatively linked to enable system 10 to operate in a continuous cycle. System 10 includes a base station 1 having at least one and optionally several process controllers 2 operatively linked with a cutting head element 3, having sensor and controlling processors 3A, positioned relative to a work piece 4 and controllably linked via an operative control loop represented at 11 with a Z-stage assembly 5 enabling precision positioning in real time of cutting head 3 relative to work piece 4.

As will be noted from Fig. 1, multiple optional communication arrangements can be provided, including transmission to an optional customer computer 7 or a separate electronic controller package 8 via a variety of communication pathways interlinked as will be understood by those of skill in the art. For the purposes of this discussion it will be understood, per the paragraph below, that all forms of communication are intended to be incorporated by reference in a manner readily understood by one so skilled.

Table of optional communication pathways between system components.

| Communication Types |
|---|
| Digital & Analog |
| Wired, Wireless and Optical |
| Ethernet, Internet (various), Cellular - digital, Satellite (This disclosure intends to encompass all forms of communication pathways, without limitation) |

It will be understood that the electronics for height sensing are used with a cutting head designed for integration into a laser system as noted earlier, and preferably for use with a flat bed laser system for cutting sheet materials, pipe materials etc. This system is readily adaptive to variable cutting arrangements and in any orientation relative to the gravity field.

A standoff height is understood to be a distance of the cutting head above a cutting surface and may be optionally understood to include a pre-set correction factor. Precise control and maintenance of the standoff height is critical to performance. Different cutting head designs (longer nozzles) may be used in robotic based cutting systems and will be understood as within the scope of this disclosure. Typically, a desired standoff height is 0.5mm to 2.0mm, preferably 1.0mm with a desired error of ±0.1mm, but may be any range based upon a number of operational factors, materials, surface coatings, focus spot, cutting or thermal treat speed and other operational variables.

Cutting head 3 may be of any operative construction effective to function as discussed herein and will be understood as operative with any connector, power consumption, or communication elements known to those of skill in the art.

As discussed particularly, cutting head 3 includes a height sensor PCB, alternatively discussed as a capacitance sensor, and process controller package included as 3A for effective operation. The cutting head sensor interface is power over Ethernet with a suitable current draw, for example of 48v between 8.3mA and 30Ma. A compliant interface uses a standard PD interface and is programmed to limit an inrush current to a value acceptable for use with a passive power source thus creating a functional delay between plugging in the device and accepting it as a PD into system 10. Further components may include an isolated converter provides internal isolation, and optionally sensing components may be positioned below or even on the work piece being treated to provide further process feedback.

Base station 1 includes a dedicated Ethernet to communicate with cutting head 3, and external customer systems 7 and 8. Communication links may be provided without limit. Suitable electronics are provided to enable operation as discussed herein. A series of required signal inputs and outputs are available to the user through Ethernet or other forms of communication (above). The minimum required inputs-outputs are discussed below.

Table of Input-Output types/results involving selected process variables and controller sense functions in a non-limited summary.

| INPUT-OUTPUT TYPES |
|---|
| Tip height (0.10mm to 15.00mm, or more, in resolution ±0.05mm) |
| Tip Touch |
| Body Touch |
| Tip Lost (Nozzle Fell Off) |
| Pierce - senses when pierce is complete to reduce time |
| Signal/Cable Link Cut/Unplugged/Disconnection |
| Out of height range |
| In range/position reached |
| Temperature reported 0-100 °C ±4 °C (thermal sensing) |
| LED (head) Status Indicator |
| Speed - variable, at least 0.05sec. resolution possible |
| Acceleration/Accelerometer |

It is understood for proper cutting of good quality that the stand off height be maintained during movement of the cutting head relative to the surface. Unfortunately surface height variation may exist due to imperfections in flatness, thickness, coating, physical distortion (bending), and thermal distortion (expansion). Such variations may occur in process (may change during a process). A typical cutting height is noted above, but proposed system 10 is operative to measure standoff height, report the result to a process controller (in the head 3 or remote from head 3 or both) and is operative to trigger a system action, including trigger a Z-axis controller and Z-stage 5 via link 11.

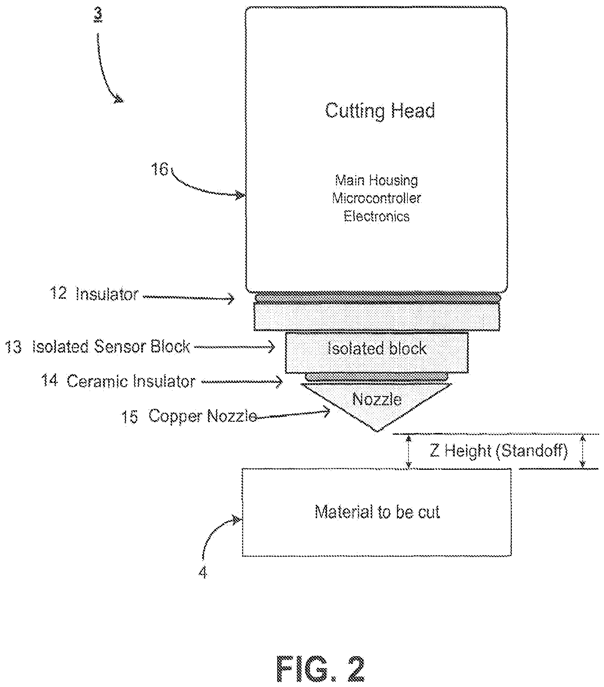

Referring now to Fig. 2, an operative cutting head 3 includes a main housing member 16 having microcontroller electronics (arranged in any operative form, including annular, flat, multi-profiled (three dimensioned), etc.), and in series off a work piece 4, a copper nozzle member 15, an insulator 14, an isolated sensor block 13, and a further insulator 12 to operatively enable a capacitance measuring system as will be discussed.

Nozzle 15 and isolated sensor block 13 of head 3 form a capacitor and have a capacitance that is affected by the distance to the material being cut. This capacitance varies approximately 4pF as the height of the nozzle changes from 0.1mm to 10mm. Similarly, it will be understood that the nozzle 15 touching the work piece makes a significant change in the signal (flagged as a 'touch'), isolated sensor block 13 hitting an object also provides a change in signal (flagged as a 'collision'), and nozzle 15 falling off also creates a cognizable signal.

In operation a 10MHz sign wave is applied across the capacitor formed by nozzle 15 and isolated sensor block 13. Small changes in capacitance cause a small (several degrees) phase shift in the signal. The signal and a reference wave form are measured, for example by an Analog Devices AD8302 gain and phase detector. The phase signal is amplified over a range of interest by a buffer amp with high gain. It will be understood that the phrases capacitance sensor, height sensor, and cutting head sensor may be used adaptively and interchangeably without departing from the scope of the present invention, as defined by the claims, and will be understood as such by those of skill in the art.

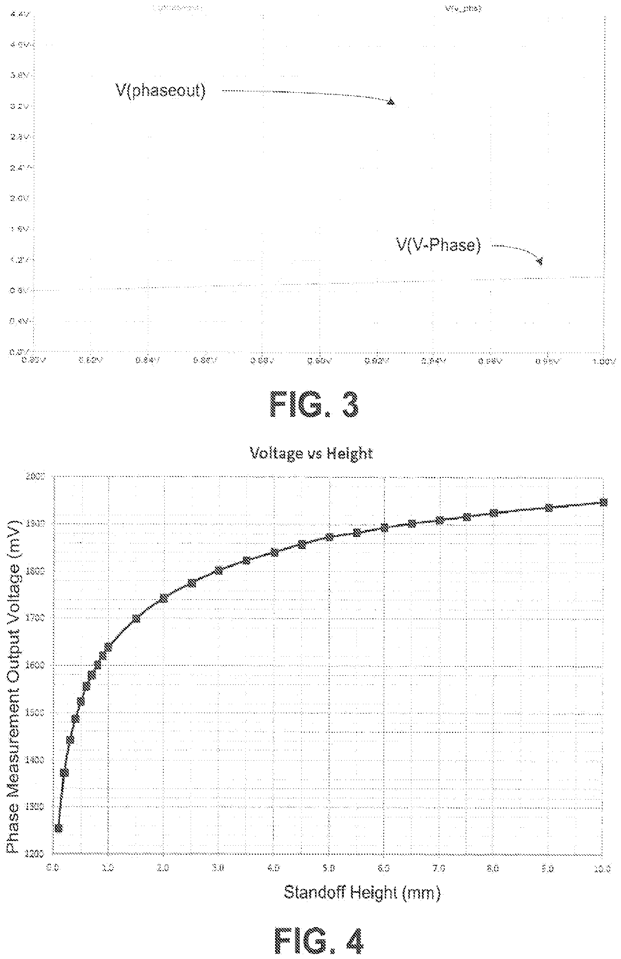

Referring now to Fig. 3, a simulation of 10 degrees of phase shift (delta 100mV from phase detector) (V(v-phase)) causes an amplifier output (V(phaseout)) to go full range. The amplified phase detector output is digitized and this measured phase change represents a capacitance change in head 3.

Referring now to Fig. 4, the capacitance change in head 3 is not linear. By calibrating cutting head 3 to measured height(s), using any operative means such as optical measurement, the capacitance change can be mapped to a height for a particular operative system. Fig. 4 is an example of the phase measurement output voltage vs. standoff height from the proposed method and system. It will be understood that the process of mapping a height for a particular laser system relative to a work piece can occur prior to operation, or in a dynamic process cycle using any measurement method known to those of skill in the art including optical, sonic (transducer), or mechanical methods. For example, while the exemplary system employs a single mapping process for Fig. 4, it will be understood that a continuous mapping process may be employed by adding a mapping or measuring system to cutting head 3 with a feed back to a process controller for continuous adjustment. As a result, the proposed method and system will be understood as adaptively dynamic.

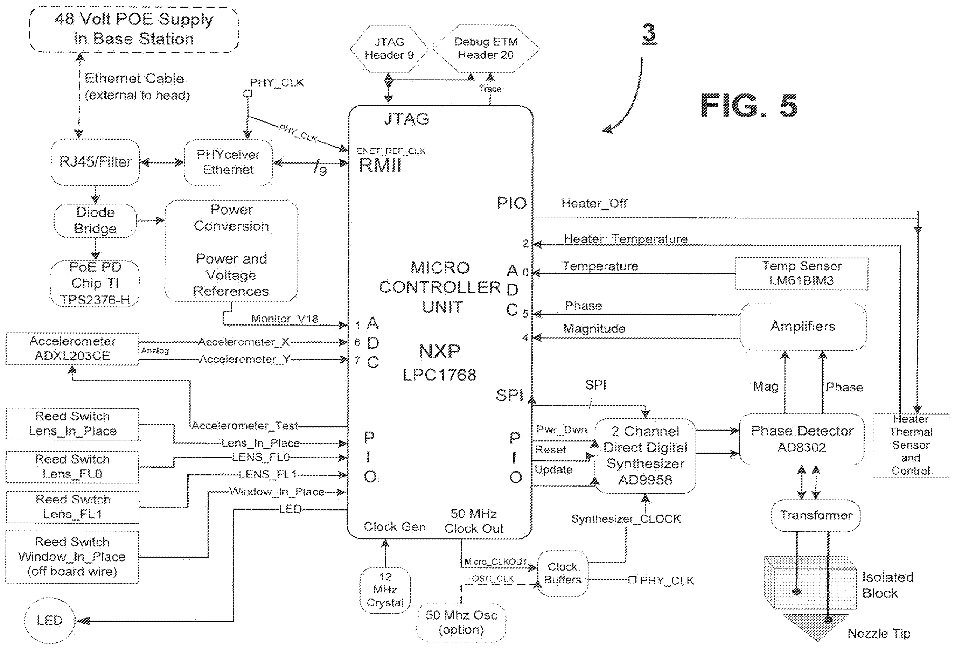

Referring now to Fig. 5, an example of the electronics schematic in cutting head 3 is discussed and remains substantially unnumbered as the references will be understood by those of skill in the art. As a non-limiting example, cutting head 3 may include an LPC17xx microcontroller (shown as an LPC1768) to communicate the height and other data back to base station 1 and further process controller 2 via Ethernet. An accelerometer is incorporated to separate motion by cutting head 3 from relative motion of work piece 4. Base station 1 allows a broad array of analog, digital, and bus input/output to adapt to differing use demands. Base station 1 may have one or multiple micro controllers.

In further explanation, the proposed capacitance sensor, height sensor, or cutting head sensor as 3A employs a two-carrier coherent synthesizer (from a 312.50 MHz system clock) to create two carrier signals equivalent in frequency but different in phase. Here, one signal (signal one) is phase-shifted by the 40pF-average capacitive head (noted as a 400-ohm environment at 10MHz) as the capacitance changes by ±5pF. A 1:8 transformer changes this to 50-ohm 320pF. The second signal (signal two) is adjusted to a fixed value that creates as close to - 90° between the two carrier signals as can be realized with 0.175° phase steps.

Phase detection is determined by an AD8302ARUZ gain-phase detector IC shown at having two outputs (as shown). One output of the phase detector is 10mV/° phase. The second output of the phase detector is 10mV/dB relative magnitude. The phase detector is adjustable, here having an adjustment range of ± 3.3° around the initial adjustment position and a granularity (into a 3.3V 12-bit ADC known in the art) of 0.003°. Thus making an initial adjustment accuracy of about ± 30 quantization levels and rendering substantial accuracy following adjustment.

In practice, base station 1, via process controller 2, regularly samples the high-gain phase and the relative magnitude (for example by a second microcontroller type LPC1768 known in the art). The high-gain phase and relative magnitude are offset by the ± 30 quantization levels of the initial adjustment inaccuracy. The high-gain phase and relative magnitude are then compared to tables of height vs. phase and short versus magnitude, and the height and short information are sent out for further use, for a non-limiting example, to a target customer interface at 8.

As introduced above, proposed system 10 enables adjustment for temperature sensitivity. The proposed phase detector system has a temperature coefficient in phase output versus ambient temperature which results in a height error estimated to be ± 10-20µm/°C. Thus, by managing circuit-sensor temperature error is managed by one or more of the process controllers in the cutting head 3, base station 1, or in remote systems 7 or 8. As proposed, a heater thermal sensor and heater circuit is provided to elevate the proposed phase detector (chip) to around 50°C and to maintain this temperature (although other temperatures may be used without limitation). A target set point enables the heater circuit to maintain temperature, for example ± 5°C from a control set point of ± 2.5°C.

As a non-limited example, a plurality of cutting heads 3, each with internal sensors and controllers 3A may be jointly operated by a single base station 1 through a production cycle, wherein a work piece may change height substantially through a cycle path. Thus by managing the above-noted features a continuously operative height adjustment is readily achieved according to the present invention.

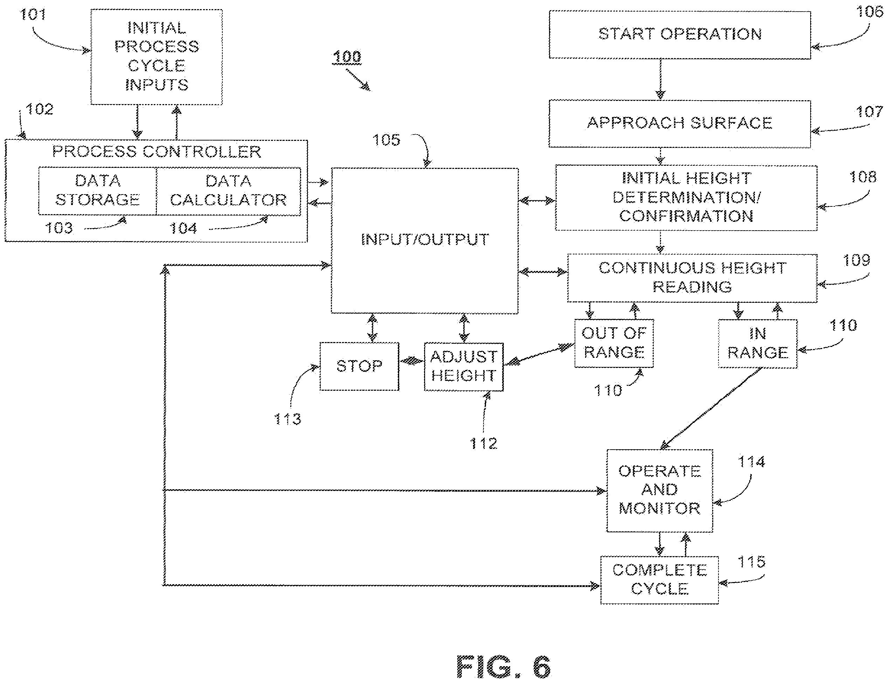

Referring now to an exemplary process flow at Fig. 6, wherein a process operation 100 includes a step of inputting initial process cycle data 101 to a process controller 102 in any form noted above and storing selected inputs in a data storage 103 operatively linked with a data calculator 104 all in communication with an input/output feature 105. In use, a start operation step 106 begins with a surface approach 107 and confirmation of an initial height 108 and then beginning of a desired laser treatment process (of any kind). Thereafter a continuous height sensing step 109 is performed throughout the continuous process. If system 100 is within range in a determination step 111, the process continues to operate and monitor in step 114 until a completion of cycle 115. However, if an out of range step is determined 110 then a cycle of height adjustment 112 and optionally a stop step 113 is initiated to ensure only in range operation. As is noted, input/output step 105 (and thus process controller interaction step 102) is continuously in communication with each operative step in system 100, through a step (via continuous reading step 109) or via a direct link, for example initial height determination step 108. It will be understood that data storage step 103 and data calculator step 104 are used continuously throughout each operation cycle as may be modified by an operational control.

It will be understood that focus is the distance below the nozzle tip that a laser is in focus. A focus spot is often desired to be below the surface of a material being cut, and potentially may extend through the material. It will also be understood that the phrase PoE (or Power over Ethernet) is an Ethernet connection that includes power.

It will be understood that the proposed system and method may be operated continuously throughout a process cycle and across different work pieces without limitation, and that such understanding of continuous includes pre- and post- laser use, such that the entire system and method will be understood as being operative 'in situ' or throughout the entire use of the system. Those of skill in the art, having studied the entire disclosure, will further recognize the broad application of the proposed system and method and that the system and components employed may be modified, removed, substituted, edited, or changed and that all such actions will be understood as within the scope of the invention, as defined by the claims.

As a non-limiting example, the proposed invention employs one or more microcontrollers or process controllers in operatively preferred locations. However, nothing in the disclosure so limits such controllers to a particular number, shape, or location, or type. Indeed, those of skill in the art will recognize that a single controller, in any location, may suffice here operatively sufficient communications loops are established between the system components.

As a further non-limiting example, the proposed communication pathways between the cutting head, base station, customer PLC or optional PC's etc. will be understood as exemplary. A single base station may suffice, or the proposed system may be substantially autonomous (without continuous signal external to the cutting head), or such communications may be fully remote from the cutting head in communication solely by wireless signal. In this manner, those of skill in the art will recognize the breadth of the invention and that all such modifications are intended to be within the scope and spirit of the present invention.

Having described at least one of the preferred embodiments of the present invention with reference to the accompanying drawings, it will be apparent to those skills that the invention is not limited to those precise embodiments, and that various modifications and variations can be made in the presently disclosed system without departing from the scope or spirit of the invention. Thus, it is intended that the present disclosure cover modifications and variations of this disclosure provided they come within the scope of the appended claims.

## Claims

1. A method for adjusting a cutting head (3) height relative to a work piece in a laser processing system, comprising the steps of: positioning a capacitance sensor (13, 15) in said cutting head (3) relative to said work piece (4); said capacitor sensor (13, 15) including a nozzle (15) and an isolated sensor block (13), wherein nozzle and isolated sensor block of cutting head (3) form a capacitor and have a capacitance that is affected by the distance to the work piece (4) being cut, applying at least a first signal having a first frequency to said sensor (13, 15); monitoring continuously a phase change of said first signal as a capacitance change in said sensor (13, 15) by evaluating said first signal during a use; and comparing said phase change to a measured height reference range, thereby determining said cutting head (3) height relative to said work piece.

2. A method for adjusting, according to claim 1, further comprising the steps of:
amplifying said first signal over an operative range; and
digitizing said amplified first signal, thereby enhancing a resolution of said continuously monitored phase change.

3. A method for adjusting, according to claim 1, further comprising the steps of:
providing a positioning system in said laser processing system operative for positioning said cutting head relative to said work piece during said use;
said method further comprising the step of:
generating a signal according to said determined cutting head height;
monitoring said signal relative to a determined process parameter; and
continuously controlling said positioning position system according to said signal to position said cutting head during said use.

4. A method for adjusting, according to claim 1, further comprising the steps of:
applying a second signal to said capacitance sensor;
said second signal having said first frequency and being in a fixed phase different from said first signal and operative as a reference signal; and
said step of monitoring further comprising the step of:
monitoring said second signal as a reference wave form.

5. A method for adjusting, according to claim 4, wherein:
said second signal is monitored to determine a relative magnitude of a phase change of said first signal during said use.

6. A method for adjusting, according to claim 1, wherein:
following said step of comparing, said method includes the step of:
determining a calibrated range of phase change for said first frequency relative to a measured range of height of said cutting head from said work piece.

7. A method for adjusting, according to claim 4,
said step of applying a second signal further comprising the steps of:
adjusting said second signal to a fixed value proximate -90° different in phase from said first signal;
said step of monitoring further comprising the step of:
determining a phase-shifting of said first signal as a capacitance change in said capacitor sensor by evaluating said phase-shifting of said first signal relative to said fixed value different in phase in said second signal; and
said step of comparing further comprising the step of:
comparing said capacitance change to a mapped reference of height versus phase change, thereby determining a relative height between said cutting head and said work piece during a use thereof.

8. A method for adjusting, according to claim 7, further comprising the steps of:
providing a positioning system in said laser processing system operative for positioning said cutting head relative to said work piece during said use;
said method further comprising the step of:
generating a control signal according to said determined cutting head height;
monitoring said control signal relative to a determined process parameter; and
continuously controlling said positioning position system according to said control signal to position said cutting head during said use.

9. A system for adjusting a cutting head (3) height relative to a work piece (4) in a laser processing system, comprising: a capacitance sensor (13, 15) in said cutting head (3) relative to said work piece (4); said capacitor sensor (13, 15) including a nozzle (15) and an isolated sensor block (13), wherein nozzle and isolated sensor block of cutting head (3) form a capacitor and have a capacitance that is affected by the distance to the work piece (4) being cut; means for applying a first signal having a first frequency to said sensor (13, 15); a detector for continuously detecting a phase change of said first signal as a capacitance change in said sensor (13, 15) by evaluating said first signal during a use; and an operative comparison system for comparing said phase change to a measured cutting head height reference range, thereby determining said cutting head (3) height relative to said work piece (4).

10. A system for adjusting, according to claim 9, further comprising:
a positioning system in said laser processing system operative for positioning said cutting head relative to said work piece during said use;
a generator for generating a signal according to said determined cutting head height;
a monitor for monitoring said signal relative to a determined process parameter; and
a process controller for continuously controlling said positioning position system according to said signal to position said cutting head during said use.

11. A system for adjusting, according to claim 10, further comprising:
means for applying a second signal to said capacitance sensor;
said second signal having said first frequency and being in a fixed phase different from said first signal and operative as a reference signal; and
a process controller operative for monitoring said second signal as a reference wave form.

12. A system for adjusting, according to claim 11, wherein:
said process controller is in said cutting head and in an operative communication with said positioning system.

13. A system for adjusting, according to claim 11, further comprising:
a remote process controller in operative communication with said capacitance sensor, and said laser processing system, and said positioning sensor.

14. A system for adjusting, according to claim 11, further comprising:
a thermal sensitivity compensator operative for said capacitance sensor.

## Patentansprüche

1. Verfahren zum Verstellen einer Höhe eines Schneidkopfs (3) relativ zu einem Werkstück in einem Laserbearbeitungssystem, umfassend die Schritte: Positionieren eines Kapazitätssensors (13, 15) im Schneidkopf (3), relativ zum Werkstück (4); wobei der Kondensatorsensor (13, 15) eine Düse (15) und einen isolierten Sensorblock (13) enthält, wobei Düse und isolierter Sensorblock des Schneidkopfs (3) einen Kondensator bilden und eine Kapazität haben, die durch den Abstand zum Werkstück (4), das geschnitten wird, beeinflusst ist, wobei zumindest ein erstes Signal mit einer ersten Frequenz an den Sensor (13, 15) angelegt wird; fortlaufendes Überwachen einer Phasenänderung des ersten Signals als eine Kapazitätsänderung im Sensor (13, 15), durch Evaluieren des ersten Signals während einer Verwendung; und Vergleichen der Phasenänderung mit einem gemessenen Höhenreferenzbereich, wodurch die Höhe des Schneidkopfs (3) relativ zum Werkstück bestimmt wird.

2. Verfahren zum Verstellen, nach Anspruch 1, ferner umfassend die Schritte:
Verstärken des ersten Signals über einen Betriebsbereich; und
Digitalisieren des verstärkten ersten Signals, wodurch eine Auflösung der fortlaufend überwachten Phasenänderung verbessert wird.

3. Verfahren zum Verstellen, nach Anspruch 1, ferner umfassend die Schritte:
Bereitstellen eines Positionierungssystems im Laserbearbeitungssystem, das betriebsfähig ist, den Schneidkopf während der Verwendung relativ zum Werkstück zu positionieren;
das Verfahren ferner umfassend den Schritt:
Erzeugen eines Signals gemäß der bestimmten Schneidkopfhöhe;
Überwachen des Signals relativ zu einem bestimmten Prozessparameter; und
fortlaufendes Steuern des Positionierungspositionssystems gemäß dem Signal, um den Schneidkopf während der Verwendung zu positionieren.

4. Verfahren zum Verstellen, nach Anspruch 1, ferner umfassend den Schritt:
Anlegen eines zweiten Signals an den Kapazitätssensor;
wobei das zweite Signal die erste Frequenz hat und in einer festgesetzten Phase ist, die sich vom ersten Signal unterscheidet, und als ein Referenzsignal betriebsfähig ist; und
der Schritt zum Überwachen ferner umfassend den Schritt:
Überwachen des zweiten Signals als eine Referenzwellenform.

5. Verfahren zum Verstellen, nach Anspruch 4, wobei:
das zweite Signal überwacht wird, um eine relative Magnitude einer Phasenänderung des ersten Signals während der Verwendung zu bestimmen.

6. Verfahren zum Verstellen, nach Anspruch 1, wobei:
nach dem Schritt zum Vergleichen das Verfahren den Schritt umfasst:
Bestimmen eines kalibrierten Bereichs einer Phasenänderung für die erste Frequenz, relativ zu einem gemessenen Bereich einer Höhe des Schneidkopfs zum Werkstück.

7. Verfahren zum Verstellen, nach Anspruch 4,
der Schritt zum Anlegen eines zweiten Signals ferner umfassend die Schritte:
Verstellen des zweiten Signals auf einen festgesetzten Wert von annähernd -90°, dessen Phase sich vom ersten Signal unterscheidet;
der Schritt zum Überwachen ferner umfassend den Schritt:
Bestimmen einer Phasenverschiebung des ersten Signals als eine Kapazitätsänderung im Kondensatorsensor, durch Evaluieren der Phasenverschiebung des ersten Signals relativ zum festgesetzten Wert, dessen Phase sich vom zweiten Signal unterscheidet; und
der Schritt zum Vergleichen ferner umfassend den Schritt von:
Vergleichen der Kapazitätsänderung mit einer abgebildeten Referenz von Höhe gegen Phasenunterschied, wodurch eine relative Höhe zwischen dem Schneidkopf und dem Werkstück während dessen Verwendung bestimmt wird.

8. Verfahren zum Verstellen, nach Anspruch 7, ferner umfassend die Schritte:
Bereitstellen eines Positionierungssystems im Laserbearbeitungssystem, das zum Positionieren des Schneidkopfs relativ zum Werkstück während der Verwendung betriebsfähig ist;
das Verfahren ferner umfassend den Schritt:
Erzeugen eines Steuersignals gemäß der bestimmten Schneidkopfhöhe;
Überwachen des Steuersignals relativ zu einem bestimmten Prozessparameter; und
fortlaufendes Steuern des Positionierungspositionssystems gemäß dem Steuersignal, um den Schneidkopf während der Verwendung zu positionieren.

9. System zum Verstellen einer Höhe eines Schneidkopfs (3) relativ zu einem Werkstück (4) in einem Laserbearbeitungssystem, umfassend: einen Kapazitätssensor (13, 15) im Schneidkopf (3), relativ zum Werkstück (4); wobei der Kondensatorsensor (13, 15) eine Düse (15) und einen isolierten Sensorblock (13) enthält, wobei Düse und isolierter Sensorblock des Schneidkopfs (3) einen Kondensator bilden und eine Kapazität haben, die durch den Abstand zum Werkstück (4), das geschnitten wird, beeinflusst ist; Mittel zum Anlegen zumindest eines ersten Signals mit einer ersten Frequenz an den Sensor (13, 15); einen Detektor zum fortlaufenden Überwachen einer Phasenänderung des ersten Signals als eine Kapazitätsänderung im Sensor (13, 15), durch Evaluieren des ersten Signals während einer Verwendung; und ein betriebsfähiges Vergleichssystem zum Vergleichen der Phasenänderung mit einem gemessenen Höhenreferenzbereich des Schneidkopfs, wodurch die Höhe des Schneidkopfs (3) relativ zum Werkstück (4) bestimmt wird.

10. System zum Verstellen, nach Anspruch 9, ferner umfassend:
ein Positionierungssystem im Laserbearbeitungssystem, das betriebsfähig ist, den Schneidkopf während der Verwendung relativ zum Werkstück zu positionieren;
einen Generator zum Erzeugen eines Signals gemäß der bestimmten Schneidkopfhöhe;
einen Monitor zum Überwachen des Signals relativ zu einem bestimmten Prozessparameter; und
ein Prozesssteuergerät zum fortlaufenden Steuern des Positionierungspositionssystems gemäß dem Signal, um den Schneidkopf während der Verwendung zu positionieren.

11. System zum Verstellen, nach Anspruch 10, ferner umfassend:
Mittel zum Anlegen eines zweiten Signals an den Kapazitätssensor;
wobei das zweite Signal die erste Frequenz hat und in einer festgesetzten Phase ist, die sich vom ersten Signal unterscheidet, und als ein Referenzsignal betriebsfähig ist; und
ein Prozesssteuergerät, das zum Überwachen des zweiten Signals als eine Referenzwellenform betriebsfähig ist.

12. System zum Verstellen, nach Anspruch 11, wobei:
das Prozesssteuergerät im Schneidkopf und in einer betriebsfähigen Kommunikation mit dem Positionierungssystem ist.

13. System zum Verstellen, nach Anspruch 11, ferner umfassend:
ein Fernprozesssteuergerät in betriebsfähiger Kommunikation mit dem Kapazitätssensor und dem Laserbearbeitungssystem und dem Positionierungssensor.

14. System zum Verstellen, nach Anspruch 11, ferner umfassend:
einen Wärmeempfindlichkeitskompensator, der für den Kapazitätssensor betriebsfähig ist.

## Revendications

1. Procédé pour régler une hauteur de tête de coupe (3) par rapport à une pièce à usiner dans un système de traitement laser, comprenant les étapes suivantes : le positionnement d'un capteur capacitif (13, 15) dans ladite tête de coupe (3) par rapport à ladite pièce à usiner (4) ; ledit capteur capacitif (13, 15) comprenant une buse (15) et un bloc de capteur (13) isolé, dans lequel la buse et le bloc de capteur isolé de la tête de coupe (3) forment un condensateur et ont une capacité affectée par la distance par rapport à la pièce à usiner (4) en train d'être coupée, l'application d'au moins un premier signal ayant une première fréquence audit capteur (13, 15) ; la surveillance en continu d'un changement de phase dudit premier signal en tant que changement de capacité dans ledit capteur (13, 15) en évaluant ledit premier signal pendant une utilisation ; et la comparaison dudit changement de phase avec une plage de référence de hauteur mesurée, en déterminant de la sorte ladite hauteur de tête de coupe (3) par rapport à ladite pièce à usiner.

2. Procédé pour régler selon la revendication 1, comprenant en outre les étapes suivantes :
l'amplification dudit premier signal sur une plage de fonctionnement ; et
la numérisation dudit premier signal amplifié en améliorant ainsi une résolution dudit changement de phase surveillé en continu.

3. Procédé pour régler selon la revendication 1, comprenant en outre les étapes suivantes :
la fourniture d'un système de positionnement dans ledit système de traitement laser opératif pour positionner ladite tête de coupe par rapport à ladite pièce à usiner pendant ladite utilisation ;
ledit procédé comprenant en outre les étapes suivantes :
la génération d'un signal selon ladite hauteur de tête de coupe déterminée ;
la surveillance dudit signal relativement à un paramètre de traitement déterminé ; et
le contrôle continu dudit système de position de positionnement selon ledit signal pour positionner ladite tête coupe pendant ladite utilisation.

4. Procédé pour régler selon la revendication 1, comprenant en outre les étapes suivantes :
l'application d'un deuxième signal audit capteur capacitif ;
ledit deuxième signal ayant ladite première fréquence et étant dans une phase fixe différente dudit premier signal et opératif en tant qu'un signal de référence ; et
ladite étape de surveillance comprenant en outre l'étape suivante :
la surveillance dudit deuxième signal en tant qu'une forme d'onde de référence.

5. Procédé pour régler selon la revendication 4, dans lequel :
ledit deuxième signal est surveillé pour déterminer une grandeur relative d'un changement de phase dudit premier signal pendant ladite utilisation.

6. Procédé pour régler selon la revendication 1, dans lequel :
à la suite de ladite étape de comparaison, ledit procédé comprend l'étape suivante :
la détermination d'un plage étalonnée de changement de phase pour ladite première fréquence par rapport à une plage mesurée de hauteur de ladite tête de coupe par rapport à ladite pièce à usiner.

7. Procédé pour régler selon la revendication 4,
ladite étape d'application d'un deuxième signal comprenant en outre les étapes suivantes :
le réglage dudit deuxième signal à une valeur fixe, différent en phase de près de -90° par rapport audit premier signal ;
ladite étape de surveillance comprenant en outre l'étape suivante :
la détermination d'un décalage de phase dudit premier signal en tant que changement de capacité dans ledit capteur capacitif en évaluant ledit décalage de phase dudit premier signal par rapport à ladite valeur fixe, différent en phase dans ledit deuxième signal ; et
ladite étape de comparaison comprenant en outre l'étape suivante :
la comparaison dudit changement de capacité avec une référence representée de hauteur versus un changement de phase, en déterminant ainsi une hauteur relative entre ladite tête de coupe et ladite pièce à usiner pendant une utilisation de celle-ci.

8. Procédé pour régler selon la revendication 7, comprenant en outre les étapes suivantes :
la fourniture d'un système de positionnement dans ledit système de traitement laser opératif pour positionner ladite tête de coupe par rapport à ladite pièce à usiner pendant ladite utilisation ;
ledit procédé comprenant en outre l'étape suivante :
la génération d'un signal de commande selon ladite hauteur de tête de coupe déterminée ;
la surveillance dudit signal de commande relativement à un paramètre de traitement déterminé ; et
le contrôle continu dudit système de position de positionnement selon ledit signal de commande pour positionner ladite tête de coupe pendant ladite utilisation.

9. Système pour régler une hauteur de tête de coupe (3) par rapport à une pièce à usiner (4) dans un système de traitement laser, comprenant : un capteur capacitif (13, 15) dans ladite tête de coupe (3) par rapport à ladite pièce à usiner (4) ; ledit capteur capacitif (13, 15) comprenant une buse (15) et un bloc de capteur (13) isolé, dans lequel la buse et le bloc de capteur isolé de la tête de coupe (3) forment un condensateur et ont une capacité affectée par la distance par rapport à la pièce à usiner (4) en train d'être coupée ; un moyen pour appliquer un premier signal ayant une première fréquence audit capteur (13, 15) ; un capteur pour détecter en continu un changement de phase dudit premier signal en tant que changement de capacité dans ledit capteur (13, 15) en évaluant ledit premier signal pendant une utilisation ; et un système de comparaison fonctionnel pour comparer ledit changement de phase avec une plage de référence de hauteur de tête de coupe mesurée, en déterminant de la sorte ladite hauteur de tête de coupe (3) par rapport à ladite pièce à usiner (4).

10. Système pour régler selon la revendication 9, comprenant en outre :
un système de positionnement dans ledit système de traitement laser opératif pour positionner ladite tête de coupe par rapport à ladite pièce à usiner pendant ladite utilisation ;
un générateur pour générer un signal selon ladite hauteur de tête de coupe déterminée ;
un moniteur pour surveiller ledit signal par rapport à un paramètre de traitement déterminé ; et
un contrôleur de processus pour contrôler en continu ledit système de position de positionnement selon ledit signal pour positionner ladite tête de coupe pendant ladite utilisation.

11. Système pour régler selon la revendication 10, comprenant en outre :
un moyen pour appliquer un deuxième signal audit capteur capacitif ;
ledit deuxième signal ayant ladite première fréquence et étant dans une phase fixe différente dudit premier signal et opératif en tant que signal de référence ; et
un contrôleur de processus opératif pour surveiller ledit deuxième signal en tant qu'une forme d'onde de référence.

12. Système pour régler selon la revendication 11, dans lequel :
ledit contrôleur de processus est dans ladite tête de coupe et en communication fonctionnelle avec ledit système de positionnement.

13. Système pour régler selon la revendication 11, comprenant en outre :
un contrôleur de processus distant en communication fonctionnelle avec ledit capteur capacitif, et ledit système de traitement laser, et ledit capteur de positionnement.

14. Système pour régler selon la revendication 11, comprenant en outre :
un compensateur de sensibilité thermique opératif pour ledit capteur capacitif.
